# EUROPEAN PATENT APPLICATION

(11) **EP 3 771 726 A1**
(43) Date of publication of application: **03.02.2021**
(21) Application number: 19075011.7
(22) Date of filing: 30.07.2019
(51) Int. Cl.: C08K 5/06, C08K 5/5425, C08K 5/57, C09D 7/63, C09D 143/04, C08F 218/10, C08F 220/18

(54) **ONE PACK AMBIENT CURE CROSSLINKABLE COPOLYMERS OF VINYL BRANCHED ESTER AND VINYL SILANE COMPOSITIONS AND USE THEREOF**

(71) Applicant: Hexion Research Belgium SA, 1348 Ottignies-Louvain-la-Neuve (BE)
(72) Inventor: The designation of the inventor has not yet been filed

(57) **Abstract**

The invention relates to an one pack ambient cure crosslinkable modified vinyl branched ester polymer with vinyl silane and a water scavanger. The copolymer composition can be formulated to the desired viscosity that allows the application by standard technics, and the curing is optimized in the presence of an appropriated catalyst as one pack system to be cure at room temperature.

## Description

### FIELD OF THE INVENTION

The present invention relates to low temperature (<80°C) moisture curable, "one package" pigmented coatings composition composed of
A) of a vinylsilane- vinyl ester based compolymer,
B) of pigments and fillers,
C) of solvents,
D) paint additives,
E) of a water scavenger such as vinyl silanes, orthoesters, titanates preferably a vinyl silane, most preferably vinyl trimethoxy silane,
F) optionally of a C1 to C 6 alcohol,
G) optionally of a polysiloxane polymer and,
H) an adhesion promotor.

Said polymeric composition is particularly suitable for ambient cure coatings and adhesives applications.

### BACKGROUND OF THE INVENTION

The use of silane in coating formulations are well known and especially acrylic-silane coating compositions have an accepted cure rate and upon curing product films having good physical and chemical properties. However, one important disadvantage of these compositions is their short potlife. Since decades options to solve this main drawback has been addressed by the industry.

The US 4,043,953 is about ambient temperature, moisture-curable coating compositions in which improved potlife is achieved by this invention comprise a blend of an acrylic-silane interpolymer derived from monomers which are devoid of active hydrogen atoms, a cure accelerating catalyst and a monomeric hydrolytically reactive organo-silicon compound represented by the structural formula:
Xn Si(OR)4-n. The having hydrolysable groups, this groups ??not clear?? EP0007765 stated the following comment on the above, while the method disclosed in US 4,043,953 undoubtedly improves the stability of polymeric organosilanes, we have found that this method has certain limitations, especially when one desires to employ the polymeric organosilanes as adhesion promoter additives, rather than as coatings per se. For a number of reasons the viscosity stability requirements are somewhat more stringent when the polymeric organosilane is used as an adhesion promoter additive, rather than as a coating material. Therefore the EP 0007765and EP 0050249 have found the presence of a low molecular weight alcohol and a monomeric hydrolytically reactive compound has a synergic effect on the stability of the acrylic-silane interpolymer.

The WO 0198419 two decades later is still looking to propose so called one-pack system by the physical separation of the catalyst, the catalyst is normally packaged separately from the (pigmented) polymer. The components are mixed together shortly before application of the coating. Fast drying storage stable one-pack systems are possible using "duplex" tins where the catalyst is stored separately from the paint in one can.

The WO 04067576 demonstrates that a stable coating formulation can be obtained when the acrylic polymer is substantially free of functional groups that can react with the polysiloxane or with the catalyst. The document is silent about the coating properties.

Accordingly, there is a need for compositions which have a reduced cure cycle and temperature while minimizing the effects of undesirable chemicals and in methods for applying such compositions. Most preferably, the industry is looking for systems able to cure at room temperature after application and yet being stable in the can before application.

### SUMMARY OF THE INVENTION

Embodiments of the invention are directed to polymeric compositions and processes for applying polymeric composition.

In one aspect of the invention, a polymer composition is provided, the composition including an organosilane copolymer derived from at least A₁ and A₂ monomers, wherein, the A₁ monomer comprises a vinyl ester monomer and the A₂ monomer comprises a vinyl silane monomer and a water scavenger selected from the group consisting of a vinyl silane, a orthoester, a titanate, a zirconate, an oxazolidine, a sulfate, and combinations thereof. The composition may further include one or more materials selected from the group consisting of a solvent, a catalyst, a pigment, a filler, a paint additive, a C1 to C6 alcohol, a polysiloxane polymer, an adhesion promotor, and combinations thereof.

In another aspect of the invention, a method is provided for applying a composition including an organosilane copolymer derived from at least A₁ and A₂ monomers, wherein, the A₁ monomer comprises a vinyl ester monomer and the A₂ monomer comprises a vinyl silane monomer and a water scavenger selected from the group consisting of a vinyl silane, a orthoester, a titanate, a zirconate, an oxazolidine, a sulfate, and combinations thereof. The composition may further be cured in the presence of moisture.

### DETAILED DESCRIPTION OF THE INVENTION

The present invention provides polymeric compositions that are useful in coating and other applications. The polymeric composition may include an organosilane copolymer and a water scavenger. The water scavenger may be selected from the group consisting of a vinyl silane, an orthoester, a titanate, a zirconate, an oxazolidine, a sulfate, and combinations thereof. The composition may further include one or more materials selected from the group consisting of a solvent, a catalyst, a pigment, a filler, a paint additive, a C1 to C6 alcohol, a polysiloxane polymer, an adhesion promotor, and combinations thereof.

The polymeric composition may be formulated to the desired viscosity that allows the application by standard coating technics, and the curing rate is optimized in the presence of an appropriated catalyst.

The polymeric composition may include an organosilane copolymer and a water scavenger. The organosilane copolymer may comprise from 5 wt.% to 80 wt.%, such as from 10 wt.% to 60 wt.%, for example, from 20 wt.% to 50 wt.% of the polymeric composition. The water scavenger may comprise from 0,05 wt.% to 10 wt.%, such as from 0.1 wt.% to 5 wt.%, for example, from 1 wt.% to 3 wt.% of the polymeric composition. The total weight percent of the components of the polymeric composition comprise 100 weight percent.

The polymeric composition comprises an organosilane copolymer. In one embodiment, the organosilane copolymer may be derived from at least A₁ and A₂ monomers, wherein, the A₁ monomer comprises a vinyl ester monomer and the B monomer comprises a vinyl silane monomer. The co-polymer may also be derived from one or more optional monomers selected from the group consisting of a monomer comprising vinyl acetate (A₃ monomer), a monomer comprising an acrylate ester, a metacrylate ester (A₄ monomer), or a combination thereof, a monomer comprising an acrylosilane monomer , a methacrylo silane monomer or a combination thereof, (A₅ monomer), a monomer comprising any other vinyl monomer than a vinyl ester or vinyl silane (A₆ monomer), and combinations thereof.

The A₁ monomer comprising a vinyl ester monomer may have the formula: 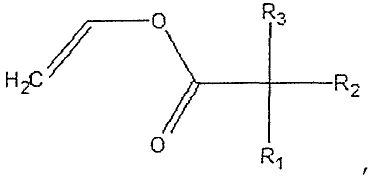 wherein R1, R2, R3 are hydrogen or alkyl groups with 1 to 15 carbon atoms, the total number of carbon atoms of R1, R2, and R3 ranging from 1 to 20. In one embodiment, the total number of carbon atoms of R1, R2, and R3 ranging from 5 to 12. Suitable vinyl esters include those derived from branched acids such as pivalic acid, 2-ethyl hexanoic, neo acids (also known as VERSATIC ACID ™ from Hexion Inc.) with the total carbon atoms in R1, R2, and R3 are 7, 8, 9, and 10. Examples of these vinyl ester monomers include vinyl pivalate, vinyl 2 ethylhexanoate, vinyl neodecanoate and vinyl neo nonanoate and combinations thereof. Commercial examples of the vinyl ester monomers include VeoVa 9, VeoVa 10, and combinations thereof, commercially available from Hexion Inc., (Company name) of Columbus, Ohio.

The vinyl ester monomer, A1 monomer, may comprise from 15 wt.% to 95% wt.%, such as from 30 wt.% to 95 wt.%, from 50 wt.% to 90 wt.%, of the total weight percent (100 wt.%) of the monomers.

The vinyl silane monomer, A₂ monomer, may comprises the formula: 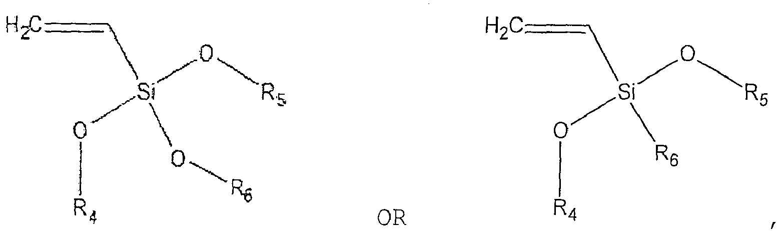 wherein R4, R5, and R6 are alkyl groups having 1 to 4 carbon atoms. Suitable vinyl silanes and R4-R6 are methoxy or ethoxy. Suitable examples of these vinyl silane monomers include vinyl trimethoxy silane, vinyl triethoxy silane, methyl vinyl diethoxy silane_, and combinations thereof. Commercial examples of the vinyl silane monomers include Silquest A171 and Silquest A151, and combinations thereof, are commercially available from Momentive Performance Materials Inc, from New York, USA (Country, or City and state if US).

The vinyl silane monomer, A₂ monomer, may comprise from 1 wt.% to 35% wt.%, such as from 2 wt.% to 25 wt.%, for example, from 2 wt.% to 20 wt.%, of the total weight percent (100 wt.%) of the monomers.

The monomer comprising vinyl acetate, A₃ monomer, may comprise from 0 wt.% to 75% wt.%, such as from 0 wt.% to 60 wt.%, from 20 wt.% to 50 wt.%, of the total weight percent (100 wt.%) of the monomers.

The monomer comprising an acrylate ester, a metacrylate ester, or a combination thereof, A₄ monomer, may also be used for the copolymer. Suitable examples of the A₃ monomer include methyl methacrylate, ethyl methacrylate, n-butyl methacrylate,iso-butyl methacrylate, ter-butyl methacrylate, isopropyl methacrylate, and isobornyl methacrylate, ethyl acrylate, butyl acrylate, and 2-ethyl hexyl acrylate and combinations thereof. The monomer comprising an acrylate ester, a metacrylate ester, or a combination thereof, A₄ monomer, may comprise from 0 wt.% to 80% wt.%, such as from 0 wt.% to 40 wt.%, from 5 wt.% to 25 wt.%, of the total weight percent (100 wt.%) of the monomers.

The monomer comprising an acrylosilane or methacrylo silane, A₅ monomer, may also be used for the copolymer. Suitable examples of the acrylosilane monomer include Methacryloxypropyl methyldimethoxysilane, methacryloxy trimethoxysilane and methacryloxy triethoxysilane and combinations thereof. Commercial examples of the acrylosilane monomer include Silquest A 174, Silquest* Y-11878 and combinations thereof, are commercially available from Momentive Performance Materials Inc, (Company name) from New York, USA (Country, or City and state if US)

The monomer comprising an acrylosilane, A₅ monomer, may comprise from 0 wt.% to 25% wt.%, such as from 0 wt.% to 15 wt.%, from 5 wt.% to 10 wt.%, of the total weight percent (100 wt.%) of the monomers.

The monomer comprising any other vinyl monomer than a vinyl ester or vinyl silane, A₆ monomer, may also be used for the copolymer. Suitable examples of the A₆ monomer include N-vinyl pyrolidone, vinyl ethers, acrylic acid, methacrylic acid and combinations thereof.

The monomer comprising any other vinyl monomer than a vinyl ester or vinyl silane, A₆ monomer, may comprise from 0 wt.% to 30% wt.%, such as from 0 wt.% to 10 wt.%, from 0 wt.% to 5 wt.%, of the total weight percent (100 wt.%) of the monomers.

In one embodiment of the invention, the copolymer derived from at least the A₁ and A₂ monomers comprises:
from about 10 wt.% to about 95% wt.% of A₁ monomer;
from about 5 wt.% to about 35% wt.% of A₂ monomer;
from about 0 wt.% to about 75% wt.% of A₃ monomer;
from about 0 wt.% to about 80% wt.% of A₄ monomer;
from about 0 wt.% to about 30% wt.% of A₅ monomer; and
from about 0 wt.% to about 30% wt.% of A₆ monomer, wherein the wt.% is based on the total weight of the at least A and B monomers, and the total weight percent is 100 wt.%.

The copolymer may have a Number average molecular weight from 1,000 daltons to 40,000 daltons, such as from 2,000 daltons to 25,000 daltons, from 3,500 daltons to 12,000 daltons.

Suitable water scavenger may be selected from the group consisting of vinyl silanes, orthoesters, titanates, zirconates, oxazolidines, calcium sulfate, cacium oxide, isocyanates zeolite based molecular sieves and combinations thereof. Examples of water scavengers include vinyl trimethoxy silane, vinyl triethoxy silane, trimethyl orthoformate, triethyl orthoformate, triethyl orthoacetate, tetra n-Butyl titanate, di-isobutoxyl titanium chelate with Ethyl acetoacetate, and combinations thereof.

In one embodiment, polymeric composition includes a coating formulation comprising the copolymer based on the monomers described herein, a water scavenger described herein, a catalyst, an organic solvent, and optionally, one or more additives.

In one embodiment, the copolymer may comprise from 10 wt.% to 90 wt.%, such as from 5 wt.% to 80 wt.%, from 10 wt.% to 60 wt.%, of the total weight percent (100 wt.%) of the coating formulation.

In one embodiment, the water scavenger may comprise from 0.05 wt.% to 15 wt.%, such as from 0.1 wt.% to 10 wt.%, from 0.2 wt.% to 5 wt.%, of the total weight percent (100 wt.%) of the coating formulation.

The catalyst may be selected from the group of a strong acid, a lewis acid, a carboxylic acid, a base, like an amine, caustic or an alcolate and combinations thereof. An alternative catalyst is a nitrate of a polyvalent metal ion such as calcium nitrate, magnesium nitrate, aluminium nitrate, zinc nitrate, or strontium nitrate, Nitrates might also be conveniently combined with amines. Other catalysts include carbonates such as sodium or calcium carbonate. Commercial examples of catalysts include SiliXan Cat 240 (SiliXan GmbH), Nacure 4054, Nacure 5076, TYZOR TNBT, TYZOR 9000, K-Kat 670(King Industries), DBTDL (dibutyl tin dilaurate) (Sigma Aldrich),3-Aminopropyltrimethoxysilane (Sigma), 2-ethyl hexanoic acid, Versatic acid (Hexion) and combinations thereof. A preferred commercial catalyst for an one package system for coating formulation is DBTDL.

In one embodiment, the catalyst may comprise from 0.1 wt.% to 3 wt.%, such as from 0.2 wt.% to 2 wt.%, from 0.3 wt.% to 1 wt.%, of the total weight percent (100 wt.%) of the polymeric composition.

The organic solvent may be selected from the group of esters, ethers, ketones, aromatics and aliphatics and combinations thereof. Examples of organic solvents include butyl acetate, xylene, methyl amyl ketone, ethoxyethyl propionate, and combinations thereof.

In one embodiment, the organic solvent may comprise from 5 wt.% to 60 wt.%, such as from 10 wt.% to 55 wt.%, from 25 wt.% to 50 wt.%, of the total weight percent (100 wt.%) of the polymeric composition.

The optional one or more additives may include one or more materials including a pigment, a filler, a paint additive, a C1 to C6 alcohol, a polysiloxane polymer [[formula x-O-Si (R, R') n -y]], an adhesion promotor, and combinations thereof.

The C1 to C6 alcohol may be selected from the group consisting of ethanol, methanol, propanol, isopropanol, butanol, isobutanol, and combinations thereof. The formulation may have 0 wt.% of the optional C1 to C6 alcohol. When present the C1 to C6 alcohol may be from 0.1wt.% to 15 wt.%, such as from 1 wt.% to 10 wt.%, from 2 wt.% to 6 wt.%, of the total weight percent (100 wt.%) of the polymeric composition.

Suitable polysiloxane polymers may be selected from the group consisting of linear and branched polyalkyl siloxane and combinations thereof. The formulation may have 0 wt.% of the polysiloxane polymer. When present the polysiloxane polymer may be from 1 wt.% to 60 wt.%, such as from 5 wt.% to 30 wt.%, from 10 wt.% to 25 wt.%, of the total weight percent (100 wt.%) of the polymeric composition.

The adhesion promotor may include epoxy silanes, alkoxysilanes and aminosilanes, titanates and zirconates and combinations thereof. Examples of suitable adhesion promoters may be selected from the group consisting of epoxypropyl trimethoxy silane and, epoxy silane oligomers, and combinations thereof. Commercial examples of adhesion promotors include Silquest A-187, Silquest A-1871 and CoatOsil MP 200 commercially available from Momentive Performance Materials from New York USA.

The formulation may have 0 wt.% of the adhesion promotor. When present the adhesion promotor may be from 0.05 wt.% to 4 wt.%, such as from 0.1 wt.% to 3 wt.%, from 0.5 wt.% to 2 wt.%, of the total weight percent (100 wt.%) of the polymeric composition.

Pigments may include anatase and rutile type of titanium dioxide, lead oxide, zinc oxide, iron oxides, carbon black and organic pigments and combinations thereof. Examples of suitable pigments may be selected from the group consisting of titanium oxide, iron oxide and combinations thereof. The formulation may have 0 wt.% of the pigments. When present the pigments may be from 3 wt.% to 60 wt.%, such as from 5 wt.% to 50 wt.%, for example, from 5 wt.% to 40 wt.%, of the total weight percent (100 wt.%) of the polymeric composition.

Fillers may include barium and calcium sulfate, silica oxides, silicates and combinations thereof. The formulation may have 0 wt.% of the fillers. When present the fillers may be from 5 wt.% to 50 wt.%, such as from 10wt.% to 40wt.%, from 10 wt.% to 30 wt.%, of the total weight percent (100 wt.%) of the polymeric composition.

Paint additives may include UV stabilizers, corrosion inhibitors, heat stabilizers, slip and mar additives, biocides, thickeners and combinations thereof.. The formulation may have 0 wt.% of the paint additives. When present the paint additives may be from 0,01 wt.% to 8 wt.%, such as from 0.02 wt.% to 6 wt.%, from 0.02 wt.% to 5 wt.%, of the total weight percent (100 wt.%) of the polymeric composition.

In one embodiment, the formulation comprises:
from 5 wt.% to 80 wt.% of the organosilane copolymer ;
from 0.1 wt.% to 10% wt.% of the water scavenger;
from 5 wt.% to 60 wt.% of the solvent;
from 0.05 wt.% to 3.0 wt.% of the catalyst;
from 0 wt.% to 15% wt.% of the C1 to C6 alcohol;
from 0 wt.% to 60% wt.% of the polysiloxane polymer;
from about 0 wt.% to about 4 wt.% of the adhesion promoter; and
from 0 wt.% to 60 wt.% of paint additives / pigments / fillers,
wherein the wt.% is based on the total weight of the composition and the total weight percent is 100 wt.%.

The total weight percent of the components of the polymeric composition comprise 100 weight percent.

This invention also concerns an one package system that has an extended self-life of at least one month comprising the copolymer based on the monomers described herein, a water scavenger described herein, a catalyst, an organic solvent, and optionally, one or more additives. The one package system has the wt.% of the components as described for the formulation described herein.

In order to provide a better understanding of the present invention including representative advantages thereof, the following examples are offered.

### EXAMPLES:

In order that those skilled in the art may more fully understand the invention presented herein, the following procedures and examples are set forth. Unless otherwise indicated, the following units of measurement and definitions apply in this application: all parts and percentages are by weight; temperatures are in degrees centigrade (°C).

### Experimental

For the following examples, the data was derived in accordance with the following procedures.

Solids: The solids is the weight percentage of non volatile material present in the coating formulations. Viscosity: The viscosity is the resistance of the polymer preparation to flow. Viscosity is determined by Brookfield viscosimeter.

Molecular weight: The molecular weight is a number average/number average? Molecular weight determined by Gel permeation chromatograph using polystyrene as reference and tetrahydrofurane as elution solvent. DIN Standard 55672

Potlife: The potlife is an estimation of the time during which the polymer composition can be used for a specific application. In the present case potlife is determined by the time taken for the polymer composition to double of viscosity in a closed can.

The following examples were performed and are provided to illustrate the invention, and should not be interpreted as limiting the scope of the invention.

**Examples 1 and 2:** in a 3L glass reactor equipped with a stirrer and a nitrogen inflow. The solvent (part 1) is poured in the reactor and a nitrogen blanket is applied (10ln/h). The stirrer is set at 80RPM. The temperature is set to 115°C. The monomer mix I is prepared by mixing the monomers, of part 3 and the initiator. Once the temperature inside the reactor is reached, a shot of (part 2) is added and the nitrogen flow is stopped. Afterwards the monomer mix I is added into the reactor over a period of 4 hours. At the end of the addition, the booster composed of the initiator and the solvent (part 5) is added for 1 hour at 115°C. Then, the reactor is kept at 115°C for an hour. The reactor is eventually cooled down below 80°C.

**Procedure for coating formulation:** The resin is first diluted with the solvent (of the synthesis) to a viscosity between 300 and 400 cPs. Then the catalyst is added to the diluted resin at a level of 0.05 to 3 % active. Afterwards, the formulated resin is applied on a panel at 100um wet with a Mayer rod and left to dry at 23±2°C and 50±5%

**Table 1: resins characteristics and coating performance**

| | **Ex 1** | **Ex 2** |
|---|---|---|
| **Part 1** | | |
| **Butyl Acetate** | 391.9 | 393.4 |

| **Part 2** | | |
|---|---|---|
| **TBPiN** | 3.9 | 4.4 |
| | | |

| **Part 3 (monomer mix I)** | | |
|---|---|---|
| **VeoVa 9** | 734.8 | - |
| | | |
| **VeoVa 10** | - | - |
| **VeoVa EH** | - | - |
| **VAM** | - | - |
| **Methyl methacrylate** | - | 591.2 |
| **Butyl acrylate** | - | 147.8 |
| **vinyltrimethoxysilane** | - | - |
| **methacrylopropyltrimethoxysilane** | 244.9 | 246.4 |
| **TBPiN** | 15.6 | 16.2 |
| | | |

| **Part 4 (monomer mix II)** | | |
|---|---|---|
| **VeoVa 9** | - | - |
| **VeoVa 10** | - | - |
| **TBPiN** | - | - |

| **Part 5** | | |
|---|---|---|
| **TBPiN** | 39.2 | 39.0 |
| **Butyl acetate** | 53.9 | 53.6 |
| | | |
| Solids (%) | 70.0 | 70.0 |
| Viscosity (cPs) | 2 200 | 40 000 |
| Residual monomers (ppm) | 200.0 | 7 200 |
| | | |
| Mw (g/mol) [DIN Standard 55672] | 25 500 | 80 000 |
| Mn (g/mol) [DIN Standard 55672] | 10 000 | 20 500 |
| pot-life (months) | limited | 0 |
| Hardness after 24h drying (s) | 120 | NT ** |
| | | |
| MEK double rub after 7days drying (number of cycles) [ASTM D4752] | 111 | NT ** |
| | | |
| MEK double rub after 30days drying (number of cycles) [ASTM D4752] | NT** | NT ** |
| * BD = Below detection ** NT = Not tested | | |

## Claims

1. A one pack ambient cure crosslinkable copolymer composition, comprising:
an organosilane copolymer derived from at least A₁ and A₂ monomers, wherein, the A₁ monomer comprises a vinyl ester monomer and the A₂ monomer comprises a vinyl silane monomer; and
a water scavenger selected from the group consisting of a vinyl silane, an orthoester, a titanate, a zirconate, an oxazolidine, a sulfate, and combinations thereof.

2. The composition of claim 1, wherein the vinyl silane of monomer A₂ comprises vinyl trimethoxy silane or vinyl triethoxy silane.

3. The composition of claim 1, wherein the water scavenger comprises from 0.1 wt.% to 10 wt.% of the solid polymer composition.

4. The composition of claim 1, wherein the A₁ and A₂ monomers comprises
from about 15 wt.% to about 95% wt.% of A₁ monomer; and
from about 5 wt.% to about 35% wt.% of A₂ monomer, wherein the wt.% is based on the total weight of the at least A₁ and A₂ monomers and the total weight percent of the polymer is 100 wt.%.

5. The composition of claim 1, wherein organosilane resin is further derived from one or more monomers selected from the group consisting of a A₃ monomer comprising vinyl acetate, a A₄ monomer comprising an acrylate ester, a metacrylate ester, or a combination thereof, an A₅ monomer comprising an acrylosilane monomer, a methacrylo silane monomer or a combination thereof, a A₆ monomer comprising any other vinyl monomer, and combinations thereof.

6. The composition of claim 5, wherein the at least A₁ and A₂ monomers comprises:
from 10 wt.% to 95% wt.% of A₁ monomer;
from 5 wt.% to 35% wt.% of A₂ monomer;
from 0 wt.% to 75% wt.% of A₃ monomer;
from 0 wt.% to 80% wt.% of A₄ monomer;
from 0 wt.% to 30% wt.% of A₅ monomer; and
from 0 wt.% to 30% wt.% of A₆ monomer, wherein the wt.% is based on the total weight of the monomers, and the total weight percent is 100 wt.%.

7. The composition of claim 1, further comprising one or more materials selected from the group consisting of a solvent, a catalyst, a pigment, a filler, a paint additive, a C1 to C6 alcohol, a polysiloxane polymer an adhesion promotor, and combinations thereof.

8. The composition of claim 7, wherein the composition comprises:
from 5 wt.% to 80 wt.% of the organosilane copolymer ;
from 0.1 wt.% to 10% wt.% of the water scavenger;
from 5 wt.% to 60 wt.% of the solvent;
from 0.05 wt.% to 3.0 wt.% of the catalyst;
from 0 wt.% to 15 wt.% of the C1 to C6 alcohol;
from 0 wt.% to 60% wt.% of the polysiloxane polymer;
from 0 wt.% to 4 wt.% of the adhesion promoter; and
from 0 wt.% to 60 wt.% of paint additives / pigments / fillers, wherein the wt.% is based on the total weight of the composition and the total weight percent is 100 wt.%.

9. The composition of claim 1, wherein vinyl ester monomers (A) are those derived from branched acids with a total number of Carbon atoms of R1, R2, and R3 ranging from 6 to 12.

10. The composition of claim 1, wherein the vinyl ester monomer comprises the formula: 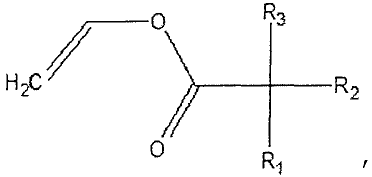 wherein R1, R2, R3 are hydrogen or alkyl groups with 1 to 15 carbon atoms, the total number of carbon atoms of R1, R2, and R3 ranging from 1 to 20; and
wherein the vinyl silane monomer comprises the formula: 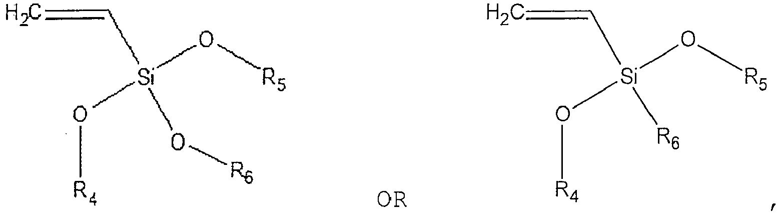 wherein R4, R5 and R6 are alkyl or alkyloxy groups having 1 to 4 carbon atoms.

11. An ambient temperature curing paint composition based on the composition of claim 1.

12. An object coated with the composition of claim 1

13. An ambient temperature curing paint composition based on the composition of claim 7.

14. Any object coated with the composition of claim 7.
